Europäisches Patentamt

European Patent Office

Office européen des brevets

(11) Veröffentlichungsnummer: **0 412 384 A2**

(19)

(12) **EUROPÄISCHE PATENTANMELDUNG**

(21) Anmeldenummer: 90114544.1

(22) Anmeldetag: 28.07.90

(51) Int. Cl.5: **G01V 1/13**, G01V 1/40

(30) Priorität: 11.08.89 DE 3926622

(43) Veröffentlichungstag der Anmeldung:
13.02.91 Patentblatt 91/07

(84) Benannte Vertragsstaaten:
AT BE CH DE DK ES FR GB GR IT LI LU NL SE

(71) Anmelder: **Prakla-Seismos GmbH**
**Buchholzer Strasse 100**
**D-3000 Hannover 51(DE)**

(72) Erfinder: **Nolte, Ernst**
**Erlenweg 22**
**D-3202 Bad Salzdetfurth(DE)**
Erfinder: **Berkenbusch, Hans-Jürgen**
**Röthekamp 2**
**D-3062 Bückeburg(DE)**

(74) Vertreter: **Meyer, Ludgerus**
**Patentanwälte Meyer, Stach, Vonnemann**
**Jungfernstieg 38**
**D-2000 Hamburg 36(DE)**

(54) **Bohrlochsonde für impulsseismische Messungen.**

(57) Es wird eine Bohrlochsonde zur impulsseimischen Aussendung akustischer Signale mit Hilfe von
Mikrosprengladungen (7) angegeben, bei der eine
Vielzahl von Sprengladungen auf dem Außenumfang
der Sonde in Ausnehmungen der Sonde angeordnet
sind und die Sprengladungen selbst in rohrförmigen
Druckkapseln (9) aufgenommen sind, die in die Ausnehmungen der Sonde eingesetzt sind.

Fig.1

EP 0 412 384 A2

## BOHRLOCHSONDE FÜR IMPULSSEISMISCHE MESSUNGEN

Die Erfindung betrifft eine Bohrlochsonde zur impulsseismischen Aussendung akustischer Signale mit Hilfe von Mikrosprengladungen gemäß dem Oberbegriff des Anspruchs 1.

Zur Erzeugung seismischer Signale werden häufig impulsseismische Quellen verwendet, insbesondere Sprengladungen. Diese werden entweder an der Oberfläche oder in Bohrlöchern eingesetzt und gezündet. Zur Vermeidung einer Beschädigung von Bohrlöchern dürfen die hierbei verwendeten Sprengladungen eine gewisse Größe nicht überschreiten. Daher werden hier vorzugsweise Mikrokapseln verwendet, die Sprengstoffmengen in der Größenordnung von 10 - 100 g aufweisen. Mikrokapseln weisen im Vergleich zu ihrer Größe eine hohe Leistung und ein breites Frequenzspektrum zur Anregung von Kompressionsund Scherwellen in Flach- und Tiefbohrungen auf.

Häufig ist es wünschenswert, mehrere Sprengungen hintereinander oder gleichzeitig auszuführen. Hierbei tritt das Problem auf, daß die Zündung einer Sprengkapsel zur ungewollten Zündung einer weiteren Sprengkapsel führen kann. Im praktischen Einsatz werden die Sprengkapseln daher in der Regel in einem großen Abstand voneinander angeordnet. Eine zeitverschobene Zündung mehrerer Sprengkapseln am gleichen Quellenort ist auf diese Weise nicht möglich.

Der Erfindung liegt die Aufgabe zugrunde, eine Bohrlochsonde zur impulsseismischen Aussendung akustischer Signale mit Hilfe von Mikrosprengkapseln anzugeben, die ohne gegenseitige Beeinflußung auf engem Raum angeordnet sein können, aber bei denen gleichzeitig die abgestrahlte akustische Energie sehr hoch ist. Diese Aufgabe wird durch die im Anspruch 1 angegebene Erfindung gelöst. Vorteilhafte weiterbildungen der Erfindung sind in Unteransprüchen angegeben.

Die erfindungsgemäße Ausbildung einer Bohrlochsonde erlaubt das enge Nebeneinanderanordnen von mehreren Sprengkapseln, die sich nicht gegenseitig beeinflußen. Die Sprengladungen sind einerseits durch ein druckfestes Gehäuse vor statischem Druck, d.h. vor dem hydrostatischen Druck in der Bohrung und durch dieses und außerdem durch ihre besondere Anordnung in der Bohrlochsonde vor dem von außen wirkenden dynamischen Druck infolge der Detonation einer benachbarten Ladung geschützt. Durch die engen Abstände der Ladungen ist eine hohe Schußzahl von beispielsweise 52 Schüssen auf engem Raum ermöglicht, ohne daß eine unerwünschte Zündung einer benachbarten Ladung erfolgt.

Die Sonde bietet die Möglichkeit zur Anregung horizontal polarisierter Scherwellen durch Wechselschüsse mit gekapselten Zündern, die um 180° gegeneinander versetzt sind. Der insbesondere aus Vollstahl bestehende Sondenkörper wirkt dabei als träge Masse, um eine einseitig gerichtete Anhebung des auf die Bohrlochwand wirkenden Druckes zu erreichen. Durch unterschiedliche Azimutlage von Wechselschußpaaren läßt sich die Polarisationsebene in Winkelschritten verändern.

Zur sicheren Handhabung der Sonde beim Laden in das Bohrloch und dem Hantieren vor dem Einfahren in das Bohrloch kann ein Schutzrohr mit insbesonderen mehrschichtigem Aufbau aus Stahl und Gummi verwendet werden.

Zur Erfassung des Auslösesignals für den Schußmoment ist vorzugsweise in der Sonde ein Hydrophon eingebaut.

Im Bedarfsfall können mehrere Schüsse gleichzeitig abgegeben werden.

Die Erfindung wird nachstehend anhand eines Ausführungsbeispiels näher erläutert.

Es zeigen

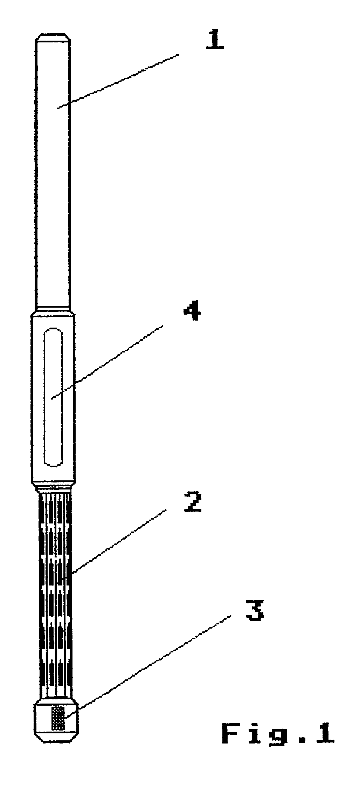

Fig. 1 eine Gesamtansicht einer erfindungsgemäßen Bohrlochsonde,

Fig. 2 eine Querschnittsansicht durch das Ladungsmagazin der Bohrlochsonde,

Fig. 3 eine Schnittansicht einer Druckkapsel mit Mikrosprengladung.

Eine Bohrlochsonde nach der Erfindung ist vorzugsweise stabförmig aufgebaut, und weist z.B. einen Durchmesser von etwa 90 mm und eine Länge von etwa 3 m auf. Die Sonde wird an einem Bohrlochkabel in das Bohrloch heruntergelassen. Die Sonde 1 weist im Oberteil einen Kabelkopf zum Anschluß der Zünddrähte auf. Die Zündung kann von Obertage her erfolgen, wodurch jedoch die Kabellänge begrenzt ist. Vorzugsweise wird daher ein Zündstromgenerator in der Sonde selbst untergebracht, der dann von Übertage her in gewünschter Weise gesteuert wird. Die Steuerung kann in der Weise erfolgen, daß einzelne Sprengladungen gezündet werden, es können jedoch auch mehrere Sprengladungen nacheinander oder phasenversetzt gezündet werden, so daß bestimmte Polarisationsrichtungen erzeugt werden können.

Die Sonde weist im mittleren Teil ein Rangierteil für die Zünderdrähte auf. In diesem Teil ist vorzugsweise auch ein Hydrophon untergebracht, das zur Feststellung des Schußzeitpunktes dient. Das Hydrophon 3 kann aber auch am unteren Ende der Sonde angebracht werden. Die Anschlußleitung des Hydrophons wird vorzugsweise durch eine zentrale Bohrung der Sonde hindurchgeführt.

Im unteren Teil der Sonde befindet sich das Ladungsmagazin 2, das z.B. bis zu 50 Sprengladungen aufnehmen kann. Die Sprengladungen sind in Druckkapseln aufgenommen, die auf dem Umfang der Sonde verteilt angeordnet sind, wobei jeweils eine Druckkapsel in einer Ausnehmung des Sondenkörpers angeordnet ist. Beispielsweise sind 8 Druckkapseln im Winkel von 45° in einer Ebene angeordnet, so daß bei 5 übereinander gestaffelten Ebenen insgesamt 40 Sprengladungen auf engstem Raum untergebracht werden können.

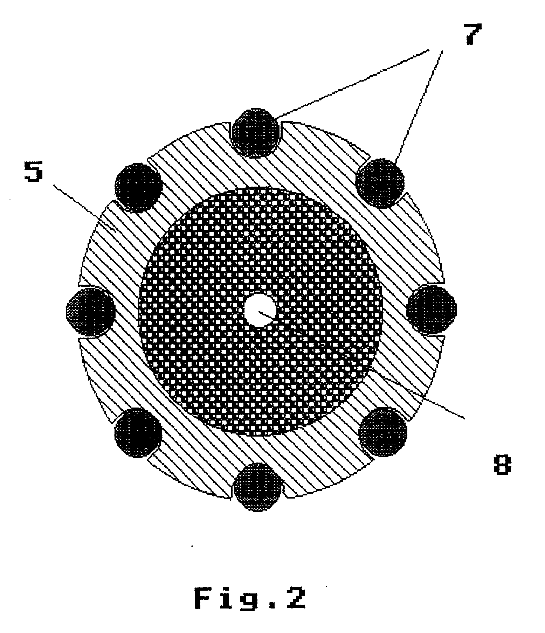

Fig. 2 zeigt eine Querschnittsansicht durch die Sonde im Bereich des Ladungsmagazins. Der Sondenkörper 5 besteht hierbei aus einem Vollprofil aus Stahl, er kann jedoch auch vorzugsweise aus einem Stahlring bestehen, in dessen innerem Hohlraum eine Füllung aus Schwermetall, z.B. ein Wolfram/Bleigemisch, eingefüllt ist. Durch die Schwermetallfüllung läßt sich die Masse des Sondenkörpers noch weiter erhöhen.

Am Außenumfang des Sondenkörpers weist dieser eine Reihe von im Winkel von beispielsweise 45° angeordneten Ausnehmungen auf, die z.B. halbzylinderisch ausgebildet sind. In diesen Ausnehmungen befinden sich die Druckkapseln mit den Sprengladungen. Durch diese besondere Ausbildung des Sondenkörpers wird die Druckwelle einer Zündung im wesentlichen radial nach außen abgestrahlt, so daß Sprengladungen eines anderen radialen Winkels unbeeinflußt bleiben. Der schwere Sondenkörper wirkt dabei als träge Masse, um eine einseitig gerichtete Anhebung des auf die Bohrlochwand wirkenden Druckes zu erreichen. Wenn mehrere gegenüberliegende Sprengladungen nacheinander gezündet werden, läßt sich eine Polarisationebene festlegen, wobei eine unterschiedliche Azimutlage von Wechselschußpaaren eine Winkelveränderung der Polarisationsebene ermöglicht. Auf diese Weise sind insbesondere Scherwellenanregungen möglich.

Im Zentrum der Sonde kann eine Bohrung vorhanden sein, durch die die Zufuhrleitungen des am unteren Ende der Sonde angebrachten Hydrophons hindurchgeführt sein können.

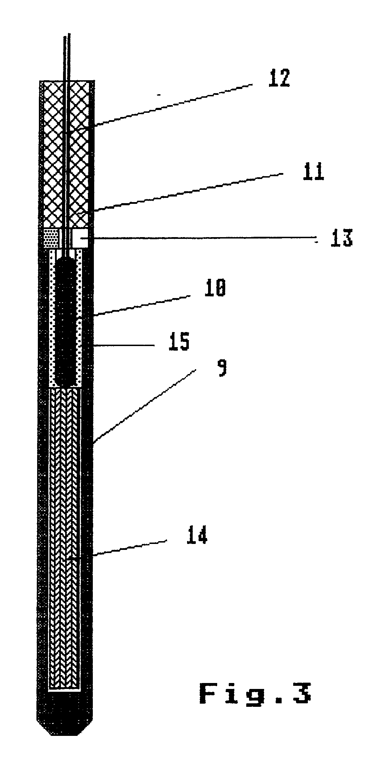

Fig. 3 zeigt eine Druckkapsel mit einer Mikrosprengladung. ,Als Druckkapsel wird eine Keramikhülse 9 verwendet, die nur eine geringe Zugfestigkeit aber eine hohe Druckfestigkeit aufweist. Hierdurch läßt sich mit Vorteil erreichen, daß eine Zündung zwar eine hohe Detonationwirkung aufweist, daß jedoch von außen auf die Druckkapsel einwirkende Druckwellen nicht zu einer Zerstörung dieser Druckkapsel führen.

Eine Druckkapsel nach der Erfindung weist einen Zünder 10 mit einer Zentrierhülse 15 auf, an die der Zünddraht 12 herangeführt ist. Im Oberteil der Druckhülse ist eine Vergußmasse eingeführt, durch die lediglich der Zünddraht 12 nach außen geführt ist. Im unteren Teil der Keramikhülse 9 kann noch Sprengschnur, z.B. 4 g Sprengstoff, untergebracht sein.

Für gleichmäßige Anregungs- und Kopplungsbedingungen im Bohrloch ist vorgesehen, daß die Sonde zentrisch im Bohrloch verankert wird. Um eine Vielzahl von Ladungen nacheinander zünden zu können, ist eine elektrische Zündschaltung mit einem Schrittschalter vorgesehen. Die einzelnen Ladungen können z.B. auf gleichem horizontalen Niveau gezündet werden. Bei unterschiedlicher Niveauhöhe z.B. kann die Energie in die gleiche horizon tale Richtung abgegeben werden.

Der Referenzaufnehmer dient zur Erfassung des Schußmoments und der Signalform des abgegebenen seismischen Impulses.

Mit Hilfe der erfindungsgemäßen Sonde können insbesondere Durchschallungsmessungen zwischen Bohrlöchern (seismische Tomographie), VSP-Messungen (normale ,und inverse) sowie seismisch-akustische Reflexionsmessungen, z.B. für die Erkundung von Salzstöcken, durchgeführt werden.

    1 Sondenkörper
    2 Ladungsmagazin
    3 Hydrophon
    4 Rangierteil
    5 Stahlring
    6 Füllung
    7 Druckkapseln
    8 Bohrung
    9 Kapselhülse
    10 Zünder
    11 Vergußmasse
    12 Zünddraht
    13 Stützring
    14 Sprengschnur
    15 Zentrierhülse

## Ansprüche

1. Bohrlochsonde zur impulsseismischen Aussendung akustischer Signale mit Hilfe von Mikrosprengladungen, dadurch gekennzeichnet, daß mehrere Sprengladungen (7) in auf dem Außenumfang angeordneten Ausnehmungen der Sonde angeordnet sind, und daß die Sprengladungen in rohrförmigen Druckkapseln (9) aufgenommen sind, die in den Ausnehmungen der Sonde eingesetzt sind.

2. Bohrlochsonde nach Anspruch 1, dadurch gekennzeichnet, daß ein zylinderförmiger Sondenkörper vorgesehen ist, an dessen Außenumfang in Achsialrichtung des Sondenkörpers verlaufende halbzylinderförmige Ausnehmungen zur Aufnahme der Druckkapseln der Sprengladungen ausgebildet sind.

3. Bohrlochsonde nach Anspruch 1 oder 2, dadurch gekennzeichnet, daß der Sondenkörper als Vollprofil ausgebildet ist.

4. Bohrlochsonde nach Anspruch 1 oder 2, dadurch gekennzeichnet, daß der Sondenkörper als Stahlring (5) ausgebildet ist, und daß der zylinderförmige Hohlraum mit Schwermetall (6) gefüllt ist.

5. Bohrlochsonde nach einem oder mehreren der vorhergehenden Ansprüche, dadurch, gekennzeichnet, daß auf dem Umfang des Sondenkörpers eine Reihe von zylinderförmigen Druckkapseln (7) mit Sprengladungen angeordnet sind, und daß in Achsialrichtung des Sondenkörpers mehrere Reihen von Druckkapseln mit Sprengladungen gestaffelt sind.

6. Bohrlochsonde nach Anspruch 1, dadurch gekennzeichnet, daß die Druckkapseln (7) aus einer Zünder (10) und ggf. zusätz lichen Sprengstoff (14) aufnehmenden Keramikhülse (9) gebildet ist.

7. Bohrlochsonde nach einem oder mehreren der vorhergehenden Ansprüche, dadurch gekennzeichnet, daß der Bohrlochsonde ein im Sondenkörper verankertes Hydrophon (3) zugeordnet ist.

8. Bohrlochsonde nach einem oder mehreren der vorhergehenden Ansprüche, dadurch gekennzeichnet, daß dem Sondenkörper ein Zündstromgenerator und eine Zündschaltung zugeordnet sind, mit der eine gesteuerte Zündung einer oder mehrerer der Sprengladungen auslösbar ist.

9. Bohrlochsonde nach Anspruch 8, dadurch gekennzeichnet, daß der Zündstromgenerator in der Sonde angeordnet ist, der durch eine Steuerleitung von Obertage her steuerbar ist.

10. Bohrlochsonde nach Anspruch 1, dadurch gekennzeichnet, daß während des Ladevorganges und des Hantieren bis zum Einführen der Sonde in ein Bohrloch ein innen mit einer gummierten Schicht versehenes Schutzrohr über den Bereich der Sprengladungen schiebbar ist.

Fig.1

Fig.2

Fig.3